Europäisches Patentamt

European Patent Office

Office européen des brevets

(19)

(11) Publication number: **0 106 131**
**A1**

(12) **EUROPEAN PATENT APPLICATION**

(21) Application number: **83108877.8**

(22) Date of filing: **08.09.83**

(51) Int. Cl.³: **B 60 T 7/12**

(30) Priority: **14.09.82 IT 581682**

(43) Date of publication of application:
**25.04.84 Bulletin 84/17**

(84) Designated Contracting States:
**AT BE CH DE FR GB IT LI LU NL SE**

(71) Applicant: **Ghironi, Franco**
**Via S. Rocco 1**
**I-09100 Cagliari(IT)**

(72) Inventor: **Ghironi, Franco**
**Via S. Rocco 1**
**I-09100 Cagliari(IT)**

(74) Representative: **Dr. Ing. A. Racheli & C.**
**Viale San Michele del Carso, 4**
**I-20144 Milano(IT)**

(54) **A vehicle applicable system for operation in case of unexpected obstacles.**

(57) A system is disclosed, as applicable to vehicles provided with a device for signalling the attained speed to the driver, comprising a sensor device (10) for sensing the presence of an obstacle, including a radar device with limited beam angle, a processing circuit (11) for the signal sensed by the sensor device (10), connected to a driving device (20) of an actuator (40), to stop or modify the vehicle motion direction.

According to the invention, it is provided that the device for signalling the attained speed to the driver comprises a changeover device for actuating the operating system when exceeding a predetermined speed.

FIG.1

EP 0 106 131 A1

Croydon Printing Company Ltd.

Applicant:

FRANCO GHIRONI

Via S. Rocco, 1

IT - 09100 CAGLIARI

"A VEHICLE APPLICABLE SYSTEM FOR OPERATION IN CASE OF UNEXPECTED OBSTACLES"

This invention relates to an operating system acting on vehicles in case of unexpected obstacles. It is operable, for example by stopping or modifying the direction of movement of said vehicles in case the presence of an obstacle is sensed.

Said system is particularly advantageous when installed, for example, on cars, lorries or trucks and motor vehicles, to act on the brake when running even under the most uncomfortable conditions. For example, it may be connected or coupled to the braking system as used at present in motor vehicles with hydraulic operation and electronic control.

Many vehicle applicable devices have been previously de┐signed, but which were not reliable in use, because of often providing false operations, or do not operate at all, or operate with delay in case of actual danger.

Therefore, it is the object of the present invention to provide a system for easy installation on vehicles and capable of operating, for example by stopping the vehicle or modifying the motion direction, as soon as the presence of an obstacle is sensed and only in case of actual need, that is, without causing any false operations.

This object is achieved by providing that said system, applicable on vehicles provided with a device for signalling the attained speed to the user or drives, comprises a sensor device, connected to a driving device of an actuator for stopping or modifying the vehicle motion direction.

An approach according to the invention provides that the device for signalling the attained speed to the driver comprises a changeover device for actuating the operating device when a predetermined speed is exceeded.

According to a particular improvement, it is provided that the signal processing circuit comprises at least one timing device for connecting the device with supply, the time interval of which is set on the characteristics and conditions of the vehicle.

An improvement contemplates the provision, again in the processing circuit, of an adjusting device for the investigation distance or reach of the radar device, for operating and modifying the investigation field on the basis of the vehicle forward speed.

According to an approach of the invention, the actuating device comprises an electrovalve which is operated by adjusting the flowrate of the actuator actuating fluid. Particularly, it is provided that the sectional area of the fluid inlet conduit is smaller than the sectional area of the fluid discharge conduit.

It is contemplated that said electrovalve is internally provided with a flow adjusting device which is calibrated on the basis of the type of vehicle to which it is applied.

According to an approach, the actuating device comprises a cylinder-piston assembly having the fluid circulating therein, the flowrate of which is adjusted by the flow adjusting device.

According to an improvement, it is contemplated that the actuator is provided with an actuating means, which the driver can directly act upon.

A preferred, but unrestrictive embodiment of the invention will now be described with reference to the accompanying drawings, in which:

Fig. 1 is a general view of the various components of the system;

Fig. 2 is a view showing an embodiment for a driving device comprising an electrovalve;

Fig. 3 is a variant to said driving device;

Fig. 4 is a view of an exemplary actuator device;

Fig. 5 is a view showing the changes made to the vehicle speed displaying device; and

Fig. 6 shows a preferred approach for a processing circuit according to the invention.

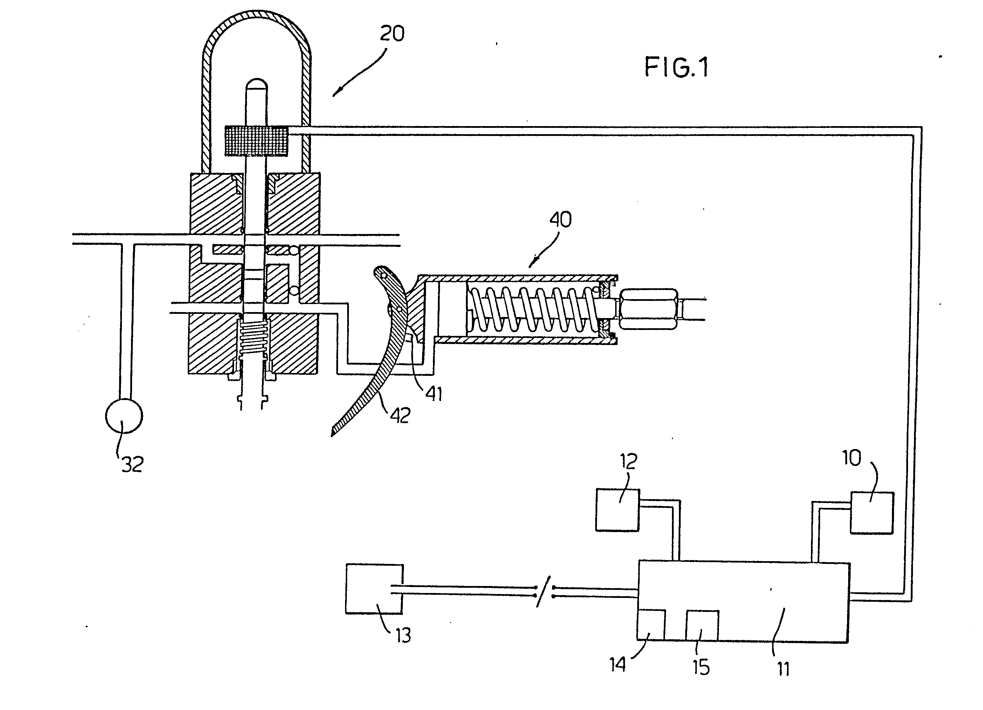

Referring now to Fig. 1, the basic components of the system will be listed. The system comprises an obstacle sensing device including a radar device 10, which, for example, may be of microwave type, but which in some cases is too sensitive. It can be of infrared type. For example, during experimental tests, use was made of a microwave radar, type 19 LD, having a beam angle of 7°, or alternatively a infrared radar type IR 738, having a beam of 7°. The control circuit, indicated as a whole at 11, internally provides at least two timers 14 and 15. The whole is supplied by the supply device 13. A distance adjusting device 12 could be also provided. The processed signal is supplied to the actuator device 20 comprising an electrovalve. It is connected to the engine lubricating system, pressure gauge 32 and, at the outlet, it acts upon the actuator device 40 which may be directly operated by the pedal 42. In connection with the braking pedal 42, a switch 41 is provided for cutting off the operation of the system according to the invention, when desired by the driver.

According to the shown embodiment, said device is applied to the braking system of a road vehicle, for example a car. By changes as obviously apparent to those skilled in the art, it could be advantageously applied to any vehicle, both of water or aircraft type.

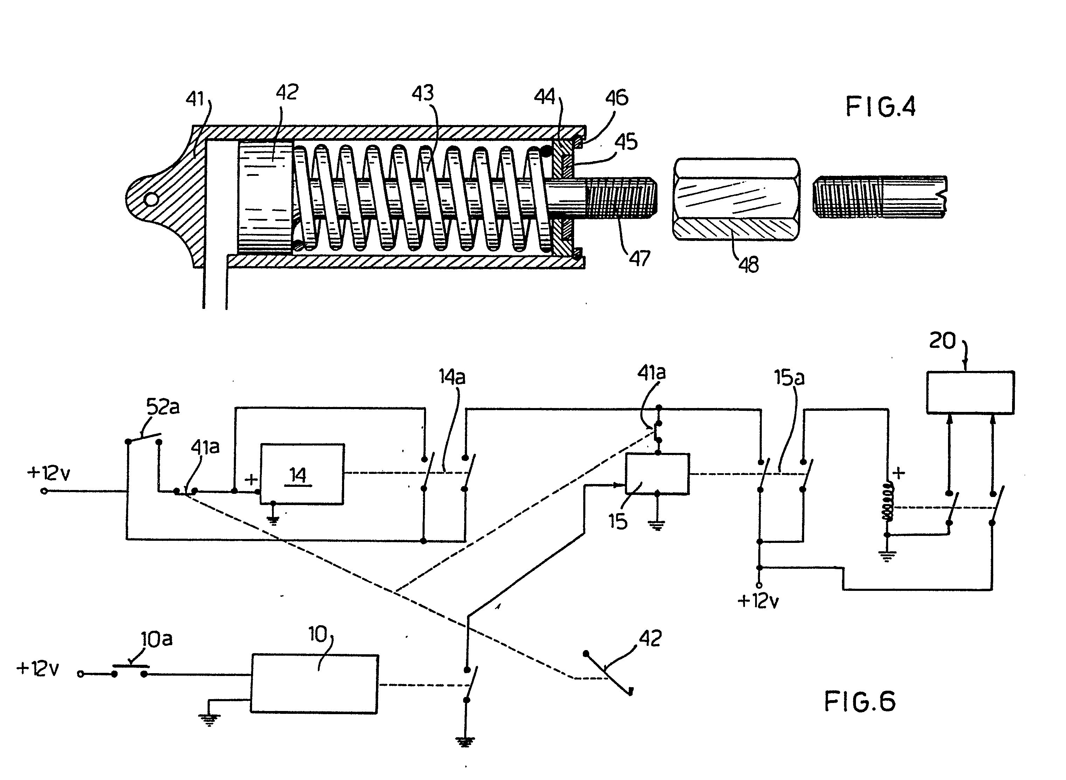

An exemplary processing circuit is shown in Fig. 6. From said Fig. 6, it will be seen that upon insertion of the contact key, the switch 10a is closed and radar 10 is supplied or powered. Said radar is supplied as long as said key is inserted. The radar is separately supplied with respect to the remainder of the circuit, because:

a) it is the radar that enables the timer for the electrovalve operation; and

b) the radar requires a stabilization time of about 5 minutes for a good operation thereof.

However, there is no risk for any person looking at a close distance the radar, since the latter is provided with an anti-blinding circuit. Said circuit can be provided by the manufacturer or prepared by a skilled technician according to the instructions of known manuals.

The car speedometer 50, shown in Fig. 5, has been provided with a sliding contact comprising, inter alia, a contact plate 52 and a resistance 51 to provide an enabling signal or forming anyhow a switch 52a for the system operation.

- 6 -

According to the shown embodiment, it has been arranged to allow the connection of the processing circuit at higher speeds than 60 km/h. However, it could be set to any speed.

Closing of switch 52a (Fig. 6) causes the operation of the timing device 14 which, in this example, has been calibrated to about 3 seconds. It performs the function of stabilize the supply voltage, even in case of poor connection from the sliding contact. As this interval expires, the timer 14 closes the switch 14a and the second timer device 15 is supplied, the timing duration of which is adjustable in the range of from 2 to 45 seconds and has the purpose of supplying the electrovalve by an auxiliary relay. The interval of said timer depends on various parameters, mainly on the machine weight, brake efficiency and engine parameters, such as oil pressure in the lubricating circuit and actuator characteristics.

According to the shown circuit, even if the timer is supplied, an enabling signal from the radar is also required, otherwise the electrovalve would not be supplied. At the time the radar intercepts an object in front of the vehicle, an enabling signal is given to the timer 15 which will provide to supply the electrovalve that will act upon the actuator causing the vehicle to stop. Should the driver not become aware of braking, for example because of being inattentive or asleep, braking would last througouht the interval of the set timing. On the other hand, should the driver resume the control of the vehicle, the driver can cut off the system by imparting a slight pressure to the brake pedal 42. The device can be amwaus cut off by the pressure of the brake pedal. Thus causes the operation of the switches 41a of Fig. 6 associated with the switch 41 of Fig. 1. The sliding contact 52 may comprise any changeover means, such as a photocell, sensor or the like and may be set at any desired speed.

Provision may be made for a distance adjusting device 12 which provides for modifying the radar investigation distance or reach on the basis of the forward speed, so that the operating device can be effective with a reasonable advance causing the vehicle stop without any consequence.

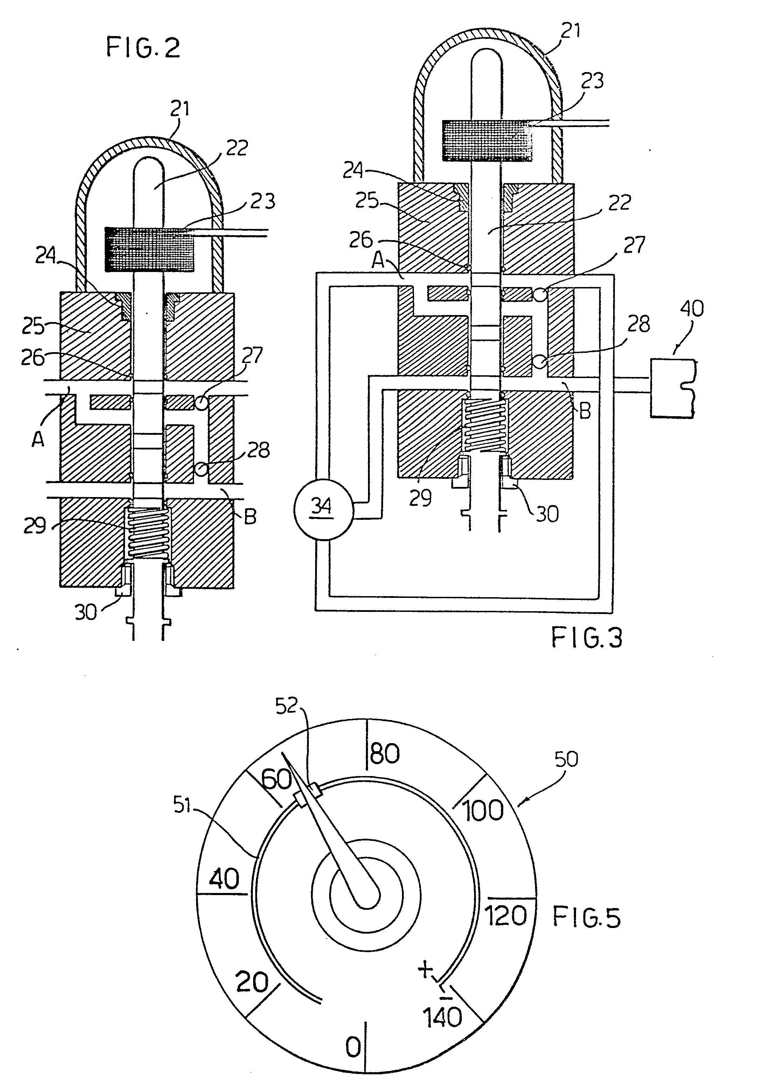

The signal provided by the processing circuit 11 acts upon the electrovalve 20. Fig. 2 shows an example of electrovalve being used. Such an electrovalve comprises a protective shroud 21, stem 22, winding 23, bushing 24, body 25, annular seal or O-ring 26, maximum pressure control valve 27, flow regulator 28, return spring 29 and locking ring nut 30. The valve of Fig. 2 is connected in the circuit shown in Fig. 1.

According to this approach, when the calibrating valve has been set to regulate the flow of fluid, such as oil, on the basis of the engine parameters, such as pressure, the stem displacement due to the signal from the control circuit which has acted upon the electric winding 23, causes the passage of fluid through the conduit B and operation of the actuator. Where the fluid supply circuit comprises an auxiliary pump 34, the circuit will be that shown in Fig. 3. Also in this case, the provision will be seen for the adjusting device 27 and 28.

In order to enable an improved adjustment of the energizing signal, it is provided that the area of the fluid inlet section, that is portion A, is smaller than the sectional area of the discharge conduit. According to a preferred approach, the diamter of the inlet conduit is 5 mm and that of the discharge conduit 10 mm.

Through the electrovalve, the fluid flows to the actuator comprising the cylinder-piston assembly shown in connection with Fig. 4. It comprises a body 41, piston 42 with its normally provided gaskets, return spring 43, stem guiding means 44, dust cover device 45, stop element 46, stem 47 and connecting nut 48. As above pointed out, said actuator device 40 may be directly operated by the driver, for example by the brake pedal 42.

Said actuator is connected in the brake boosters on the vehicle after possible modifications, which however are in the reach of those skilled in the art.

From the foregoing, it will clearly appear that the safety system is operating under any weather condition, any route and, owing to its usefulness, can be installed on any vehicle. What makes such a system as a unique system is the flexibility of its operation, since its behaviour can vary as circumstances vary. That is, should an abstacle be suddenly present, the slowing down of the vehicle on which the system is installed is immediate and safe. Should the obstacle be remote, the apparatus will sense the distance thereof on the basis of the brake state and speed, and decide the opportunity of starting a gradual slowing down.

Said flexibility is further due to the capability of adjusting the time interval, and accordingly the rate, during which braking should occur according to the paths and the driver's physical state, as well as weather conditions. The operations for adjusting the braking and disconnecting the system are simple and practical, since such operations can be caried out directly from the driving position. It will also be clearly apparent that the processing circuit could comprise any type of obstacle sensing apparatus, provided that such an apparatus is capable of supplying an output signal and an input or receiving signal as well as a signal whenever an obstacle appears along the path or travel.

FRANCO GHIRONI

09100 CAGLIARI (Italy)

C L A I M S

1.      An operating device acting on vehicles in case of unexpected obstacles, comprising a device for signalling the attained speed to the driver, characterized by including a sensor device (10) for sensing the obstacle occurrence, comprising a radar device with limited beam angle, a processing circuit (11) for the signal as sensed by the sensor device (10), connected to a driving device (20) of an actuator (40), capable of stopping or modifying the vehicle running direction.

2.      A system as claimed in Claim 1, characterized by having a changeover element (52) for operating the processing circuit (11) when a predetermined speed is exceeded.

3.      A system as claimed in Claim 1, characterized in that the processing circuit (11) comprises at least one timing device (15) for supplying the operating device, the time interval of which is set on the basis of the vehicle type and conditions.

4. A system as claimed in Claim 1, characterized in that said processing circuit (11) comprises an adjusting device (12) for the investigation distance of the radar (10) capable of modifying the investigation range on the basis of the vehicle motion speed.

5. A system as claimed in Claim 1, characterized in that said operating device (20) comprises an electrovalve which is effective by regulating the flowrate for the operating in that said operating device comprises an electrovalve which is effective by regulating the flowrate for the operating fluid of the actuator (40).

6. A system as claimed in Claim 5, characterized in that the area of the fluid inlet conduit (A) is smaller than the sectional area of the fluid discharge conduit (B).

7. A system as claimed in Claim 5, characterized in that a further flow regulating device (27, 28) is arranged internally of the electrovalve said device being calibrated on the basis of the type of vehicle to which it is applied.

8. A system as claimed in Claim 1, characterized in that said actuator (40) comprises a cylinder-piston assembly (41, 42) for fluid circulation, the flow of which is regulated by the flow regulating device.

9. A system as claimed in Claim 1, characterized in that said actuator device (40) has an operating means (42) which can be directly acted upon by the driver.

10.   A system as claimed in Claim 9, characterized by having a changeover device (41) for cutting off said processing circuit (11) when the driver acts upon the operating means (42).

FIG.1

FIG.2

FIG.3

FIG.5

FIG.4

FIG.6

**European Patent Office**

**EUROPEAN SEARCH REPORT**

Application number

EP 83 10 8877

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 841 427  (DI VITA)  * Figures 2-4 * | 1,4,5, 8,9 | B 60 T   7/12 |
| A | US-A-3 972 382  (TAKAYAMA et al.)  * Figures 1-3 * | 1,5,8, 9 | |
| A | US-A-3 921 749  (KAWADA)  * Figure 1 * | 1 | |
| A | GB-A-1 464 317  (NISSAN) | | |
| A | DE-A-2 164 456  (BORCHARDT) | | |
| | | | **TECHNICAL FIELDS SEARCHED (Int. Cl. ³)** |
| | | | B 60 T   7/00 |

The present search report has been drawn up for all claims

| Place of search BERLIN | Date of completion of the search 06-12-1983 | Examiner LUDWIG H J |
|---|---|---|